(19) **Europäisches Patentamt**
**European Patent Office**
**Office européen des brevets**

(11) **EP 1 704 651 B1**

(12) **EUROPEAN PATENT SPECIFICATION**

(45) Date of publication and mention
of the grant of the patent:
**24.07.2013 Bulletin 2013/30**

(51) Int Cl.:
***H04B 1/7113*** *(2011.01)*

(21) Application number: **05700775.9**

(86) International application number:
**PCT/EP2005/000130**

(22) Date of filing: **10.01.2005**

(87) International publication number:
**WO 2005/069500 (28.07.2005 Gazette 2005/30)**

(54) **METHOD OF AND APPARATUS FOR PATH-SEARCHER WINDOW POSITIONING**

VERFAHREN UND VORRICHTUNG ZUR WEGSUCHER FENSTER-POSITIONIERUNG

PROCÉDÉ ET APPAREIL DE POSITONNEMENT DE LA FENÊTRE DE RECHERCHE DE CHEMIN

(84) Designated Contracting States:
**AT BE BG CH CY CZ DE DK EE ES FI FR GB GR HU IE IS IT LI LT LU MC NL PL PT RO SE SI SK TR**

(30) Priority: **12.01.2004 US 755803**
**12.01.2004 US 755760**

(43) Date of publication of application:
**27.09.2006 Bulletin 2006/39**

(73) Proprietor: **Telefonaktiebolaget LM Ericsson (publ)**
**164 83 Stockholm (SE)**

(72) Inventor: **REIAL, Andres**
**S-222 41 Lund (SE)**

(74) Representative: **Åkerman, Mårten Lennart et al**
**Ericsson AB**
**Patent Unit Mobile Platforms**
**Nya Vattentornet**
**221 83 Lund (SE)**

(56) References cited:
**EP-A- 1 041 729     WO-A-02/080423**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Technical Field

The invention relates to digital wireless communications systems in which delays of individual multi-path components of a time-varying fading channel are to be estimated. The digital wireless communications systems may include, for example, systems using Code Division Multiple Access (CDMA) RAKE receivers and, more particularly, systems using receivers that operate in fading environments and have limited processing resources, such as Wideband CDMA (WCDMA) receivers.

History of Related Art

US 2004/0095957 describes a method for pilot channel tracking based on multipath channel barycenter tracking loop, comprises steps of evaluating multi path fading channel parameters, calculating the barycenter of a multipath energy window, and loop filtering and adjusting the phase of spread spectrum sequence codes.

EP1041729 A describes a method for synchronizing timing of a digital signal used in radio transmission systems, especially in systems with Code Division Multiple Access (CDMA).

In wireless communications, a physical channel between a transmitter and a receiver is formed via a radio link. In most cases, no antenna of the transmitter is narrowly focused towards the receiver. In addition to a possible direct path, many other propagation paths often exist between the transmitter and the receiver. The other propagation paths typically result from reflections from objects near the transmitter or the receiver. Rays with similar propagation distances combine at the receiver, depending on an instantaneous phase relationship, and form a distinct multi-path component. The effect of a combination of the rays depends on the instantaneous phase relationship of a carrier wavelength and also on distance differences among the rays. In the case of destructive interference, the combination of the rays leads to a significant decrease in path-gain magnitude (i.e., fading).

Performance of a CDMA receiver is improved if signal energy carried by many multi-path components is utilized. A desired improvement in CDMA receiver performance may be achieved via a RAKE receiver. In the RAKE receiver, each of a plurality of multi-path components is assigned a despreader (i.e., RAKE finger). Each of the plurality of despreaders is assigned a reference copy of a spreading code. Each of the spreading-code reference copies is delayed in time by an amount equal to a path delay of a corresponding multi-path component. Outputs of the respective despreaders are then coherently combined via a RAKE combiner to produce a symbol estimate.

The RAKE receiver preferably uses knowledge of the multi-path delays and channel-impulse values for all detected paths. To achieve a best possible signal-to-noise ratio at an output of the RAKE combiner, signal energy from as many physical paths as possible should be collected. In addition, tracking as many different physical paths as possible (i.e., maximal utilized diversity) significantly improves signal-reception robustness, since the probability of a simultaneous deep fade of all paths is reduced. Simultaneous deep fade of all paths is a phenomenon that typically leads to serious block-error-rate (BLER) degradation.

A propagation channel structure (i.e., absolute and relative delays of the individual multi-path components) does not typically remain constant over time. Due to relative movement of the transmitter, the receiver, and nearby objects, delays of existing paths may change, old paths may disappear, and new paths may appear. In addition, a frequency offset between respective circuits of the transmitter and the receiver gives rise to a clock drift. The clock drift generally manifests itself as a gradual time-axis movement of the entire delay profile. To ensure proper operation of the RAKE receiver, the changing delays of all known multi-path components should be tracked and new paths should be discovered quickly after the new paths appear.

Due to the physical channel structure, in most cases relative positions of the nearby objects change. Thus, path lengths of the new paths usually do not differ significantly from path lengths of the existing paths. The macro-structure of the channel (e.g., mountains or groups of buildings that cause signal reflections) changes relatively rarely. Therefore, most often, the delays of the new paths are relatively similar to those of the existing, known, paths. Therefore; the delays of the new paths may be detected by searching near the known delays of the existing paths.

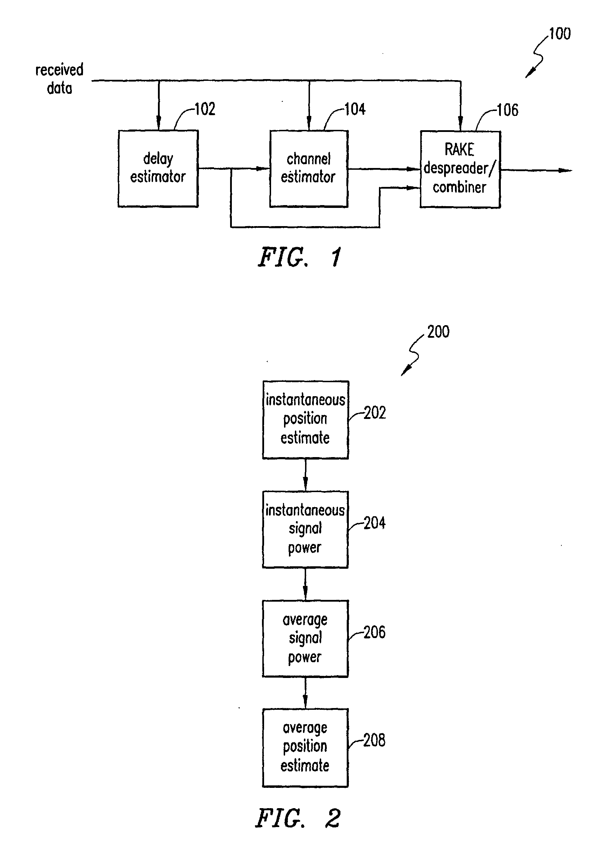

FIGURE 1 is a block diagram of a typical RAKE receiver. A RAKE receiver 100 includes a delay estimator block 102, a channel estimator block 104, and a RAKE despreader/combiner block 106. Received data are fed to the delay estimator block 102. The delay estimator block 102 evaluates an impulse response of a channel over a range of possible delays of the channel. A resulting delay profile, which may be a complex delay profile or a power delay profile, may then be subjected to peak detection and detected peak locations reported to the RAKE despreader/combiner block 106 as delay estimates for the multi-path components. The delay estimates are also used by the channel estimator block 104 to estimate corresponding complex channel coefficients by despreading a pilot sequence and possibly filtering results over time to reduce the effects of noise and interference. Channel parameters are estimated in collaboration between the delay estimator block 102, which determines temporal alignment of a despreader portion of the RAKE despreader/combiner block 106, and the channel estimator block 104, which estimates the complex coefficients to be used by a combiner portion of the RAKE despreader/combiner block 106. A noise-plus-interference power estimate is also made.

A simple approach to delay estimation involves evaluating an impulse response of a channel over an entire range of possible delays (i.e., maximal assumed delay spread) of the channel. A resulting complex delay profile or power delay profile may then be subjected to peak detection and detected peak locations reported by the delay estimator block 102 to the channel estimator block 104 and the RAKE despreader/combiner block 106 as delay estimates. However, processing and power-consumption expenses of frequent execution of a full path-searching routine are usually prohibitive. Therefore, typical implementations may use path searchers with observation windows shorter than the full search area (i.e., the maximal assumed delay spread). In addition, resolution of the path searcher may be reduced and additional densely-sampled windows of despreaders used that produce higher-resolution estimates of certain areas of the power delay profile. In any case, for any practical delay estimation, a path search is periodically undertaken to re-scan the delay range with the purpose of detecting new paths.

A delay-estimation algorithm extracts the path positions and finds the path delays with sufficient accuracy once the path positions are discovered by the path searcher. A path-searcher window is positioned so that new paths are included within the path-searcher window. Since it is known with sufficiently-high probability that the new paths will appear in the vicinity, in terms of the paths' respective delays, of the currently-known paths, the path-searcher window is usually placed so as to cover the currently-known paths.

At time n, a window-positioning algorithm has some information available about locations and powers of the currently-known paths (e.g., tracked path list and/or paths' magnitudes, a recent power-delay-profile estimate from the path searcher, etc...) and can produce an instantaneous window position estimate at time n, which is represented as $\tau^{(n)}$. Since an actual instantaneous window position may depend on a momentary fading state of the channel, as well as on a residual noise-plus-interference realization, it is often not advisable to directly use the instantaneous position estimate. Instead, some form of filtering is typically used to combine a current instantaneous position estimate with past instantaneous-position-estimate values. Combining the current and past instantaneous-position-estimate values significantly reduces effects of noise and avoids unacceptable fluctuations of the instantaneous-position-estimate that can occur due to fading patterns that, for practical path-searcher activation schedules, may be completely independent from one path-searcher activation to the next.

A typical filtering process uses exponential smoothing as an averaging scheme. The average position estimate $\bar{\tau}^{(n)}$ is found as follows:

$$\bar{\tau}^{(n)} = \alpha\bar{\tau}^{(n-1)} + \left(1-\alpha\right)\tau^{(n)} \tag{1}$$

where a forgetting factor $\alpha$ is determined by a desired time constant of the filtering process.

In an environment with little or no fading, the averaging scheme of equation (1) is acceptable and achieves suppression of noise-induced fluctuations with low computational and storage requirements. However, in the presence of fading, it has been observed that the accuracy of the delay estimation suffers. Therefore, a method of and system for path-searcher window positioning that overcomes these and other drawbacks is needed.

SUMMARY OF THE INVENTION

Embodiments of the present invention provide a method of and apparatus for path searcher window positioning. In an embodiment of the present invention, a method of determining an average position estimate includes determining an average signal power of a path-searcher window. The step of determining the average signal power includes using a previously-determined average signal power and an instantaneous signal power. The method also includes determining the average position estimate. The step of determining the average position estimate includes using an instantaneous position estimate, a previously-determined average position estimate, the previously-determined average signal power, and the instantaneous signal power.

In another embodiment of the invention, an apparatus for determining an average position estimate includes a channel estimator, a despreader, and a delay estimator. The delay estimator is interoperably connected to the channel estimator and the despreader. The delay estimator is for determining an average signal power of a path-searcher window and determining the average position estimate. The determination of the average signal power includes using a previously-determined average signal power and an instantaneous signal power. The determination of the average position estimate includes using an instantaneous position estimate, a previously-determined average position estimate, the previously-determined average signal power, and the instantaneous signal power.

BRIEF DESCRIPTION OF THE DRAWINGS

A more complete understanding of exemplary embodiments of the present invention can be achieved by reference to the following Detailed Description of Exemplary Embodiments of the Invention when taken in conjunction with the accompanying Drawings, wherein:

FIG. 1, previously described, is a block diagram of a typical RAKE receiver; and

FIG. 2 is a flow diagram that illustrates path-searcher window positioning in accordance with principles of the invention.

DETAILED DESCRIPTION OF EXEMPLARY EMBODIMENTS OF THE INVENTION

In a non-fading environment, or for values of $\alpha$ close to 1, the averaging scheme of equation (1) is acceptable and achieves suppression of noise-induced fluctuations with low computational and memory-storage requirements. However, in the presence of fading, the signal energy available for position estimation at any given time n varies with the fading, while the expected noise energy remains relatively constant. Thus, the decision conditions are not constant over time. In fact, some decisions may even be dominated by noise. An instantaneous fading pattern determines the distribution of signal energy within a corresponding observation region; however, equation (1) treats all position estimates $\tau^{(n)}$ as equal, and combines all of the position estimates with equal significance, which leads to excessive noise and fluctuations being included in the averaging process.

Embodiments of the invention improve the robustness of detecting new multi-path components in a radio propagation channel by suitably combining instantaneous window position estimates to reliably position a path searcher window for new searches. In accordance with principles of the invention, a path-searcher window position is temporally filtered to track existing paths and detect new paths in a vicinity thereof and effects of the residual noise plus interference and fading-induced variations in a path structure are minimized.

Simultaneously with computing the instantaneous window position, an instantaneous signal power within a window region is recorded. The signal power is filtered in time, using, for example, exponential smoothing, in order to yield an average signal power. The instantaneous position is added to the average position using the instantaneous and average signal powers as respective combining weights. As a result, the channel realizations reflecting only partial path structure or noise-dominated cases are accumulated with relatively low weight, while the full realizations with high signal-to-noise ratios contribute most to the average. In addition, recording the average powers and window positions allows for convenient combination of positions of various disjoint window position estimates via power-weighted summing.

Referring again to the FIGURES, FIGURE 2 is a flow diagram that illustrates path-searcher window positioning in accordance with principles of the invention. A flow 200 begins at step 202, where an instantaneous window position estimate $\tau^{(n)}$ is made at time n. At step 204, signal power $P^{(n)}$ covered by the window at time n is calculated, preferably by summing power-delay-profile components used for determining the instantaneous window position estimate and subtracting any expected noise component. In some embodiments of the invention, the expected noise component may be estimated by observing a noise floor of the power-delay-profile estimate. At step 206, an average signal power $\overline{P}^{(n)}$ for the path-searcher window is computed. $\overline{P}^{(n)}$ may be computed as:

$$\overline{P}^{(n)} = \alpha \overline{P}^{(n-1)} + (1-\alpha)P^{(n)}. \tag{2}$$

A position estimate computed from an instantaneous power delay profile inherently fluctuates due to path-profile fading variations. Even without any residual noise or interference, the instantaneous position estimate may differ significantly from an average position estimate, the average position estimate being the quantity of actual interest. For practical forgetting factors $\alpha$, an equal-weight smoothing of all sequential instantaneous position estimate values as in equation (1) is sub-optimal, since the contribution to the average value is irrespective of the signal component actually present in the instantaneous power delay profile - an essentially-random position estimate from a deeply-faded, noise-only power delay profile realization will be given significance equal to a position estimate based on a full, well-defined path profile. Therefore, at step 208, an average position estimate is calculated using the instantaneous position estimate, the instantaneous signal power, a previously-calculated average signal power (e.g., at time n-1), and a previously-calculated average position estimate (e.g., at time n-1). The calculation made in step 208 improves the quality of the average position estimate by introducing power-weighting as follows:

$$\overline{\tau}^{(n)} = \frac{\alpha \overline{P}^{(n-1)} \overline{\tau}^{(n-1)} + (1-\alpha)P^{(n)}\tau^{(n)}}{\alpha \overline{P}^{(n-1)} + (1-\alpha)P^{(n)}} \qquad (3)$$

A resulting smoothed position estimate from step 208 is based predominantly on position estimates from strong channel realizations, while noise-only and partial profiles are suppressed. Embodiments of the invention use power estimates $P^{(n)}$ that are properly noise-corrected (i.e., contain only the signal energy with mean noise energy equal to zero). Any residual noise component reduces the effectiveness of the power weighting, although, even if a residual noise component were still present, embodiments of the invention would still have substantial benefits over prior approaches.

Embodiments of the invention provide stable window position averaging with improved noise suppression and reduced fluctuation due to fading-related changes in the path profile. In accordance with principles of the invention, random, noise-induced, position estimates during fades have minimal effect on the average position value. Thus, the path-searcher window does not fluctuate during fades and the risk of losing existing regions of activity is significantly reduced.

Embodiments of the invention also result in marginal computational additions compared to prior approaches. The average power computation and slightly more complex weight calculation for position filtering accumulation are added. Given the infrequent computation of the path-searcher window position, the computational premium may be considered negligible.

The embodiment(s) of the invention described above is one of many different possible embodiments. For example, a complex delay profile may be used instead of a power delay profile, in which case the power of each delay profile element is found by multiplying the complex coefficient by its complex conjugate. Principles of the invention are also applicable to different types of instantaneous position estimates, such as, for example, center of gravity, and power-capture-based position decisions. The source data may be, for example, a continuous power-delay-profile estimate, a subset of its peaks, or a list of tracked paths with their magnitudes. While different signal power measures may be used, it is preferable that they are free of bias. A reliable position estimate and a corresponding average power estimate in accordance with principles of the invention is also applicable to a situation in which position estimates for several disjoint observation regions need to be combined (e.g., when conducting extended path search beyond the currently followed regions to detect new clusters of path activity). The average position estimates for the disjoint regions may be combined by using the average powers as combining weights. The resulting position may then be used for positioning the path-searcher window.

Although embodiment(s) of the present invention have been illustrated in the accompanying Drawings and described in the foregoing Detailed Description, it will be understood that the present invention is not limited to the embodiment(s) disclosed, but is capable of numerous rearrangements, modifications, and substitutions without departing from the invention defined by the following claims.

## Claims

1. A method of determining an average path-searcher window position estimate in a RAKE receiver, the method is **characterized by**:

    determining (202) an average signal power of a path-searcher window, the step of determining the average signal power comprising using a previously-determined average signal power and an instantaneous signal power; and
    determining (208) the average position estimate, the step of determining the average position estimate comprising using an instantaneous position estimate, a previously-determined average position estimate, the previously-determined average signal power, and the instantaneous signal power.

2. The method of claim 1, wherein the step of determining (202) the average signal power comprises using a forgetting factor.

3. The method of claim 1, wherein the step of determining (208) the average position estimate comprises using a forgetting factor.

4. The method of claim 1, wherein the step of determining (208) the average position estimate comprises:

weighting the previously-determined average position estimate by a factor related to the previously-determined average signal power; and

adjusting the previously-determined average position estimate by the instantaneous position estimate weighted by a factor related to the instantaneous signal power.

5. The method of claim 1, wherein a greater value of the present instantaneous signal power results in a greater difference between the average position estimate and the previously-determined position estimate than does a lesser value of the present instantaneous signal power.

6. The method of claim 1, further comprising the steps of:

determining (204) the instantaneous signal power; and
determining (202) the instantaneous position estimate.

7. The method of claim 1, wherein:
the average signal power is represented by

$$\overline{P}^{(n)} = \alpha\overline{P}^{(n-1)} + (1-\alpha)P^{(n)};$$

$\alpha$ is a forgetting factor;
$\overline{P}^{(n-1)}$ is the previously-determined average signal power; and
$P^{(n)}$ is the present instantaneous signal power.

8. The method of claim 1, wherein:

the average position estimate is represented by

$$\overline{\tau}^{(n)} = \frac{\alpha\overline{P}^{(n-1)}\overline{\tau}^{(n-1)} + (1-\alpha)P^{(n)}\tau^{(n)}}{\alpha\overline{P}^{(n-1)} + (1-\alpha)P^{(n)}};$$

$\alpha$ is a forgetting factor;
$\overline{P}^{(n-1)}$ is the previously-determined average signal power;
$P^{(n)}$ is the present instantaneous signal power;
$\tau^{(n)}$ is the instantaneous position estimate; and
$\overline{\tau}^{(n-1)}$ is the previously-determined average position estimate.

9. The method of claim 1, wherein the step of determining (208) the average position estimate comprises exponential smoothing and power-weighted summing.

10. The method of claim 1, wherein the present instantaneous signal power is noise-corrected.

11. An apparatus (100) for determining an average path-searcher window position estimate in a RAKE receiver, the apparatus (100) comprising:

a channel estimator (104);
a despreader (106); and
a delay estimator (102) interoperably connected to the channel estimator (104) and the despreader (106), the apparatus (100) is **characterized by** that the delay estimator (102) is configured to:

determine an average signal power of a path-searcher window, the determination of the average signal power comprising using a previously-determined average signal power and an instantaneous signal power; and
determine the average position estimate, the determination of the average position estimate comprising using an instantaneous position estimate, a previously- determined average position estimate, the previously-determined average signal power, and the instantaneous signal power.

12. The apparatus (100) of claim 11, wherein the determination of the average signal power comprises use of a forgetting factor.

13. The apparatus (100) of claim 11, wherein the determination of the average position estimate comprises use of a forgetting factor.

14. The apparatus (100) of claim 11, wherein the determination of the average position estimate comprises to:

weight the previously-determined average position estimate by a factor related to the previously-determined average signal power; and
adjust the previously-determined average position estimate by the instantaneous position estimate weighted by a factor related to the instantaneous signal power.

15. The apparatus (100) of claim 11, configured such that a greater value of the present instantaneous signal power results in a greater difference between the average position estimate and the previously-determined position estimate than does a lesser value of the present instantaneous signal power.

16. The apparatus (100) of claim 11, wherein the delay estimator is further configured to:

determine the instantaneous signal power; and
determine the instantaneous position estimate.

17. The apparatus (100) of claim 11, wherein:
the average signal power is represented by

$$\overline{P}^{(n)} = \alpha \overline{P}^{(n-1)} + (1-\alpha)P^{(n)};$$

$\alpha$ is a forgetting factor;
$\overline{P}^{(n-1)}$ is the previously-determined average signal power; and
$P^{(n)}$ is the present instantaneous signal power.

18. The apparatus (100) of claim 11, wherein:

the average position estimate is represented by

$$\overline{\tau}^{(n)} = \frac{\alpha \overline{P}^{(n-1)}\overline{\tau}^{(n-1)} + (1-\alpha)P^{(n)}\tau^{(n)}}{\alpha \overline{P}^{(n-1)} + (1-\alpha)P^{(n)}};$$

$\alpha$ is a forgetting factor;
$\overline{P}^{(n-1)}$ is the previously-determined average signal power;
$P^{(n)}$ is the present instantaneous signal power;
$\tau^{(n)}$ is the instantaneous position estimate; and
$\overline{\tau}^{(n-1)}$ is the previously-determined average position estimate.

19. The apparatus (100) of claim 11, wherein the determination of the average position estimate comprises to exponentially smooth and power-weight summing.

20. The apparatus (100) of claim 11, wherein the present instantaneous signal power is noise-corrected.

21. An article of manufacture for determining an average path-searcher window position estimate in a RAKE receiver, the article of manufacture is **characterized by**:

at least one computer readable medium; and
processor instructions contained on the at least one computer readable medium, the processor instructions configured to be readable from the at least one computer readable medium by at least one processor and thereby cause the at least one processor to operate as to:

determine an average signal power of a path-searcher window, the determination of the average signal power comprising using a previously-determined average signal power and an instantaneous signal power; and

determine the average position estimate, the determination of the average position estimate comprising using an instantaneous position estimate, a previously- determined average position estimate, the previously-determined average signal power, and the instantaneous signal power.

**Patentansprüche**

1. Verfahren zur Bestimmung einer Schätzung einer mittleren Position eines Wegsucherfensters in einem RAKE-Empfänger, wobei das Verfahren **gekennzeichnet ist durch**:

Bestimmen (202) einer mittleren Signalleistung eines Wegsucherfensters, wobei der Schritt des Bestimmens der mittleren Signalleistung ein Verwenden einer früher bestimmten mittleren Signalleistung und einer Momentansignalleistung umfasst; und
Bestimmen (208) der Schätzung der mittleren Position, wobei der Schritt des Bestimmens der Schätzung der mittleren Position ein Verwenden einer Momentanpositionsschätzung, einer früher bestimmten Schätzung der mittleren Position, der früher bestimmten mittleren Signalleistung und der Momentansignalleistung umfasst.

2. Verfahren nach Anspruch 1, wobei der Schritt des Bestimmens (202) der mittleren Signalleistung ein Verwenden eines Vergessensfaktors umfasst.

3. Verfahren nach Anspruch 1, wobei der Schritt des Bestimmens (208) der Schätzung der mittleren Position ein Verwenden eines Vergessensfaktors umfasst.

4. Verfahren nach Anspruch 1, wobei der Schritt des Bestimmens (208) der Schätzung der mittleren Position umfasst:

Gewichten der früher bestimmten Schätzung der mittleren Position durch einen Faktor, der mit der früher bestimmten mittleren Signalleistung in Beziehung steht; und
Anpassen der früher bestimmten Schätzung der mittleren Position durch die Momentanpositionsschätzung, die durch einen Faktor gewichtet ist, der mit der Momentansignalleistung in Beziehung steht.

5. Verfahren nach Anspruch 1, wobei ein größerer Wert der gegenwärtigen Momentansignalleistung zu einer größeren Differenz zwischen der Schätzung der mittleren Position und der früher bestimmten Positionsschätzung führt, als dies ein kleinerer Wert der gegenwärtigen Momentansignalleistung tut.

6. Verfahren nach Anspruch 1, ferner umfassend die folgenden Schritte:

Bestimmen (204) der Momentansignalleistung; und
Bestimmen (202) der Momentanpositionsschätzung.

7. Verfahren nach Anspruch 1, wobei:

die mittlere Signalleistung dargestellt wird durch

$$\overline{P}^{(n)} = \alpha \overline{P}^{(n-1)} + (1 - \alpha) P^{(n)};$$

$\alpha$ ein Vergessensfaktor ist;
$\overline{P}^{(n+1)}$ die früher bestimmte mittlere Signalleistung ist; und
$P^{(n)}$ die gegenwärtige Momentansignalleistung ist.

**8.** Verfahren nach Anspruch 1, wobei:

die Schätzung der mittleren Position dargestellt wird durch

$$\overline{\tau}^{(n)} = \frac{\alpha \overline{P}^{(n-1)}\overline{\tau}^{(n-1)} + (1-\alpha)P^{(n)}\tau^{(n)}}{\alpha \overline{P}^{(n-1)} + (1-\alpha)P^{(n)}};$$

$\alpha$ ein Vergessensfaktor ist;
$\overline{P}^{(n-1)}$ die früher bestimmte mittlere Signalleistung ist; und
$P^{(n)}$ die gegenwärtige Momentansignalleistung ist;
die Momentanpositionsschätzung ist; und
$\overline{\tau}^{(n-1)}$ die früher bestimmte Schätzung der mittleren Position ist.

**9.** Verfahren nach Anspruch 1, wobei der Schritt des Bestimmens (208) der Schätzung der mittleren Position exponentielles Glätten und leistungsgewichtetes Summieren umfasst.

**10.** Verfahren nach Anspruch 1, wobei die gegenwärtige Momentansignalleistung rauschkorrigiert wird.

**11.** Vorrichtung (100) zum Bestimmen einer Schätzung einer mittleren Position eines Wegsucherfensters in einem RAKE-Empfänger, wobei die Vorrichtung (100) umfasst:

ein Kanalschätzer (104);
einen Entspreizer (106); und
einen Verzögerungsschätzer (102), der mit dem Kanalschätzer (104) und dem Entspreizer (106) dialogfähig verbunden ist, wobei die Vorrichtung (100) **dadurch gekennzeichnet ist, dass** der Verzögerungsschätzer (102) konfiguriert ist zum:
Bestimmen einer mittleren Signalleistung eines Wegsucherfensters, wobei die Bestimmung der mittleren Signalleistung ein Verwenden einer früher bestimmten mittleren Signalleistung und einer Momentansignalleistung umfasst; und
Bestimmen der Schätzung der mittleren Position, wobei die Bestimmung der Schätzung der mittleren Position ein Verwenden einer Momentanpositionsschätzung, einer früher bestimmten Schätzung der mittleren Position, der früher bestimmten mittleren Signalleistung und der Momentansignalleistung umfasst.

**12.** Vorrichtung (100) nach Anspruch 11, wobei die Bestimmung der mittleren Signalleistung die Verwendung eines Vergessensfaktors umfasst.

**13.** Vorrichtung (100) nach Anspruch 11, wobei die Bestimmung der Schätzung der mittleren Position die Verwendung eines Vergessensfaktors umfasst.

**14.** Vorrichtung (100) nach Anspruch 11, wobei die Bestimmung der Schätzung der mittleren Position umfasst:

Gewichten der früher bestimmten Schätzung der mittleren Position durch einen Faktor, der mit der früher bestimmten mittleren Signalleistung in Beziehung steht; und
Anpassen der früher bestimmten Schätzung der mittleren Position durch die Momentanpositionsschätzung, die durch einen Faktor gewichtet ist, der mit der Momentansignalleistung in Beziehung steht.

**15.** Vorrichtung (100) nach Anspruch 11, die so konfiguriert ist, dass ein größerer Wert der gegenwärtigen Momentansignalleistung zu einer größeren Differenz zwischen der Schätzung der mittleren Position und der früher bestimmten Positionsschätzung führt, als dies ein kleinerer Wert der gegenwärtigen Momentansignalleistung tut.

**16.** Vorrichtung (100) nach Anspruch 11, wobei der Verzögerungsschätzer ferner konfiguriert ist zum:

Bestimmen der Momentansignalleistung; und
Bestimmen der Momentanpositionsschätzung.

**17.** Vorrichtung (100) nach Anspruch 11, wobei:

die mittlere Signalleistung dargestellt ist durch

$$\overline{P}^{(n)} = \alpha\overline{P}^{(n-1)} + (1-\alpha)P^{(n)};$$

$\alpha$ ein Vergessensfaktor ist;
$\overline{P}^{(n-1)}$ die früher bestimmte mittlere Signalleistung ist; und
$P^{(n)}$ die gegenwärtige Momentansignalleistung ist.

**18.** Vorrichtung (100) nach Anspruch 11, wobei:

die Schätzung der mittleren Position dargestellt ist durch

$$\overline{\tau}^{(n)} = \frac{\alpha\overline{P}^{(n-1)}\overline{\tau}^{(n-1)} + (1-\alpha)P^{(n)}\tau^{(n)}}{\alpha\overline{P}^{(n-1)} + (1-\alpha)P^{(n)}};$$

$\alpha$ ein Vergessensfaktor ist;
$\overline{P}^{(n-1)}$ die früher bestimmte mittlere Signalleistung ist; und
$P^{(n)}$ die gegenwärtige Momentansignalleistung ist;
$\tau^{(n)}$ die Momentanpositionsschätzung ist; und
$\overline{\tau}^{(n-1)}$ die früher bestimmte Schätzung der mittleren Position ist.

**19.** Vorrichtung (100) nach Anspruch 11, wobei die Bestimmung der Schätzung der mittleren Position exponentielles Glätten und leistungsgewichtetes Summieren umfasst.

**20.** Vorrichtung (100) nach Anspruch 11, wobei die gegenwärtige Momentansignalleistung rauschkorrigiert ist.

**21.** Herstellungsgegenstand zum Bestimmen einer Schätzung einer mittleren Position eines Wegsucherfensters in einem RAKE-Empfänger, wobei der Herstellungsgegenstand **gekennzeichnet ist durch**:

mindestens ein computerlesbares Medium; und
Prozessoranweisungen, die auf dem mindestens einen computerlesbaren Medium enthalten sind, wobei die Prozessoranweisungen so konfiguriert sind, dass sie vom dem mindestens einen computerlesbarem Medium **durch** mindestens einen Prozessor ausgelesen werden können und **dadurch** den mindestens einen Prozessor veranlassen, so zu funktionieren, dass er:
eine mittlere Signalleistung eines Wegsucherfensters bestimmt, wobei die Bestimmung der mittleren Signalleistung ein Verwenden einer früher bestimmten mittleren Signalleistung und einer Momentansignalleistung umfasst; und
die Schätzung der mittleren Position bestimmt, wobei die Bestimmung der Schätzung der mittleren Position ein Verwenden einer Momentanpositionsschätzung, einer früher bestimmten Schätzung der mittleren Position, der früher bestimmten mittleren Signalleistung und der Momentansignalleistung umfasst.

**Revendications**

**1.** Procédé de détermination d'une estimation moyenne de position de fenêtre de dispositif de recherche de voies dans un récepteur RAKE, le procédé étant **caractérisé par** :

déterminer (202) une puissance de signal moyenne d'une fenêtre de dispositif de recherche de voies, l'étape de détermination de la puissance de signal moyenne comprenant d'utiliser une puissance de signal moyenne précédemment déterminée et une puissance de signal instantanée ; et

déterminer (208) l'estimation de position moyenne, l'étape de détermination de l'estimation de position moyenne comprenant d'utiliser une estimation de position instantanée, une estimation de position moyenne précédemment déterminée, la puissance de signal moyenne précédemment déterminée et la puissance de signal instantanée.

**2.** Procédé selon la revendication 1, dans lequel l'étape de détermination (202) de la puissance de signal moyenne comprend d'utiliser un facteur d'oubli.

**3.** Procédé selon la revendication 1, dans lequel l'étape de détermination (208) de l'estimation de position moyenne comprend d'utiliser un facteur d'oubli.

**4.** Procédé selon la revendication 1, dans lequel l'étape de détermination (208) de l'estimation de position moyenne comprend de :

pondérer l'estimation de position moyenne précédemment déterminée par un facteur relatif à la puissance de signal moyenne précédemment déterminée ; et
ajuster l'estimation de position moyenne précédemment déterminée par l'estimation de position instantanée pondérée par un facteur relatif à la puissance de signal instantanée.

**5.** Procédé selon la revendication 1, dans lequel une valeur plus grande de la puissance de signal instantanée actuelle entraîne une plus grande différence entre l'estimation de position moyenne et l'estimation de position précédemment déterminée que ne le fait une valeur plus petite de la puissance de signal instantanée actuelle.

**6.** Procédé selon la revendication 1, comprenant en outre les étapes consistant à :

déterminer (204) la puissance de signal instantanée ; et
déterminer (202) l'estimation de position instantanée.

**7.** Procédé selon la revendication 1, dans lequel :

la puissance de signal moyenne est représentée par

$$\overline{P}^{(n)} = \alpha \overline{P}^{(n-1)} + (1-\alpha)P^{(n)} \quad ;$$

$\alpha$ est un facteur d'oubli ;
$\overline{P}^{(n-1)}$ est la puissance de signal moyenne précédemment déterminée ; et
$P^{(n)}$ est la puissance de signal instantanée actuelle.

**8.** Procédé selon la revendication 1, dans lequel :

l'estimation de position moyenne ets représentée par

$$\overline{\tau}^{(n)} = \frac{\alpha \overline{P}^{(n-1)} \overline{\tau}^{(n-1)} + (1-\alpha)P^{(n)}\tau^{(n)}}{\alpha \overline{P}^{(n-1)} + (1-\alpha)P^{(n)}} \quad ;$$

$\alpha$ est un facteur d'oubli ;
$\overline{P}^{(n-1)}$ est la puissance de signal moyenne précédemment déterminée ;
$P^{(n)}$ est la puissance de signal instantanée actuelle ;
$\tau^{(n)}$ est l'estimation de position instantanée ; et
$\overline{\tau}^{(n-1)}$ est l'estimation de position moyenne précédemment déterminée.

**9.** Procédé selon la revendication 1, dans lequel l'étape de détermination (208) de l'estimation de position moyenne comprend un lissage exponentiel et une sommation à puissance pondérée.

**10.** Procédé selon la revendication 1, dans lequel la puissance de signal instantanée actuelle est corrigée en bruit.

**11.** Dispositif (100) pour déterminer une estimation moyenne de position de fenêtre de dispositif de recherche de voies dans un récepteur RAKE, le dispositif (100) comprenant :

    un estimateur de canal (104) ;
    un désétaleur (106) ; et
    un estimateur de retard (102) connecté interopérationnellement à l'estimateur de canal (104) et au désétaleur (106), le dispositif (100) est **caractérisé en ce que** l'estimateur de canal (102) est configuré afin de :

        déterminer une puissance de signal moyenne d'une fenêtre de dispositif de recherche de voies, la détermination de la puissance de signal moyenne comprenant d'utiliser une puissance de signal moyenne précédemment utilisée et une puissance de signal instantanée ; et
        déterminer l'estimation de position moyenne, la détermination de l'estimation de position moyenne comprenant d'utiliser une estimation de position instantanée, une estimation de position moyenne précédemment déterminée, la puissance de signal moyenne précédemment déterminée et la puissance de signal instantanée.

**12.** Dispositif (100) selon la revendication 11, dans lequel la détermination de la puissance de signal moyenne comprend l'utilisation d'un facteur d'oubli.

**13.** Dispositif (100) selon la revendication 11, dans lequel la détermination de l'estimation de position moyenne comprend l'utilisation d'un facteur d'oubli.

**14.** Dispositif (100) selon la revendication 11, dans lequel la détermination de l'estimation de position moyenne comprend de :

    pondérer l'estimation de position moyenne précédemment déterminée par un facteur relatif à la puissance de signal moyenne précédemment déterminée ; et
    ajuster l'estimation de position moyenne précédemment déterminée par l'estimation de position instantanée pondérée par un facteur relatif à la puissance de signal instantanée.

**15.** Dispositif (100) selon la revendication 11, configuré de sorte qu'une valeur plus grande de la puissance de signal instantanée actuelle entraîne une plus grande différence entre l'estimation de position moyenne et l'estimation de position précédemment déterminée que ne le fait une valeur plus petite de la puissance de signal instantanée actuelle.

**16.** Dispositif (100) selon la revendication 11, dans lequel l'estimateur de retard est en outre configuré afin de :

    déterminer la puissance de signal instantanée ; et
    déterminer l'estimation de position instantanée.

**17.** Dispositif (100) selon la revendication 11, dans lequel :

    la puissance de signal moyenne est représentée par

$$\overline{P}^{(n)} = \alpha \overline{P}^{(n-1)} + (1-\alpha) P^{(n)} \quad ;$$

    $\alpha$ est un facteur d'oubli ;
    $\overline{P}^{(n-1)}$ est la puissance de signal moyenne précédemment déterminée ; et
    $P^{(n)}$ est la puissance de signal instantanée actuelle.

**18.** Dispositif (100) selon la revendication 11, dans lequel :

    l'estimation de position moyenne ets représentée par

$$\overline{\tau}^{(n)} = \frac{\alpha \overline{P}^{(n-1)} \overline{\tau}^{(n-1)} + (1 - \alpha) P^{(n)} \tau^{(n)}}{\alpha \overline{P}^{(n-1)} + (1 - \alpha) P^{(n)}}$$

$\alpha$ est un facteur d'oubli ;

$\overline{P}^{(n-1)}$ est la puissance de signal moyenne précédemment déterminée ;

est la puissance de signal instantanée actuelle ;

$\tau^{(n)}$ est l'estimation de position instantanée ; et

$\overline{\tau}^{(n-1)}$ est l'estimation de position moyenne précédemment déterminée.

**19.** Dispositif (100) selon la revendication 11, dans lequel la détermination de l'estimation de position moyenne comprend un lissage exponentiel et une sommation à puissance pondérée.

**20.** Dispositif (100) selon la revendication 11, dans lequel la puissance de signal instantanée actuelle est corrigée en bruit.

**21.** Article manufacturé pour déterminer une estimation moyenne de position de fenêtre de dispositif de recherche de voies dans un récepteur RAKE, l'article manufacturé étant **caractérisé par** :

au moins un support lisible par ordinateur ; et

des instructions de processeur contenues sur au moins un support lisible par ordinateur, les instructions de processeur configurées afin d'être lisibles depuis au moins un support lisible par ordinateur par au moins un processeur et amener ainsi le au moins un processeur à fonctionner de manière à :

déterminer une puissance de signal moyenne d'une fenêtre de dispositif de recherche de voies, la détermination de la puissance de signal moyenne comprenant d'utiliser une puissance de signal moyenne précédemment déterminée et une puissance de signal instantanée ; et

déterminer l'estimation de position moyenne, la détermination de l'estimation de position moyenne comprenant d'utiliser une estimation de position instantanée, une estimation de position moyenne précédemment déterminée, la puissance de signal moyenne précédemment déterminée et la puissance de signal instantanée.

100

received
data

—102                    —104                    —106

delay
estimator  →  channel
estimator  →  RAKE
despreader/
combiner  →

## FIG. 1

200

instantaneous
position
estimate  —202

↓

instantaneous
signal
power  —204

↓

average
signal
power  —206

↓

average
position
estimate  —208

## FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040095957 A
- EP 1041729 A